# EUROPÄISCHE PATENTSCHRIFT

(11) **EP 1 549 478 B1**
(45) Veröffentlichungstag und Bekanntmachung des Hinweises auf die Patenterteilung: **13.06.2007**
(21) Anmeldenummer: 03807791.3
(22) Anmeldetag: 14.08.2003
(51) Int. Cl.: B29C 47/64, B29C 47/38, B29C 47/42

(54) **EXTRUDER/ZAHNRADPUMPEN-KOMBINATION**
EXTRUDER/GEAR PUMP ASSEMBLY
ENSEMBLE EXTRUDEUSE/POMPE A ENGRENAGES

(30) Priorität: 27.09.2002 DE 10245306
(43) Veröffentlichungstag der Anmeldung: 06.07.2005
(73) Patentinhaber: Berstorff GmbH, 30625 Hannover (DE)
(72) Erfinder: FISCHER, Florian, W., 85560 Ebersberg (DE); UPHUS, Reinhard, 30419 Hannover (DE)
(74) Vertreter: Zollner, Richard
(86) Internationale Anmeldenummer: PCT/EP2003/009021
(87) Internationale Veröffentlichungsnummer: WO 2004/033187

(56) Entgegenhaltungen:
- EP-A- 0 445 584
- EP-A- 1 310 347
- WO-A-00/61947
- DE-A- 10 049 730
- GB-A- 855 362
- US-A- 3 307 489
- US-A- 4 289 409

## Beschreibung

Die Erfindung betrifft eine Extruder/Zahnradpumpen-Kombination, gemäß dem Oberbegriff von Anspruch 1.

Aufbauten aus Zahnradpumpen und Extrudern sind seit langem bekannt. Bei den Extrudern nachgeschalteten Zahnradpumpen lässt sich durch die Zahnradpumpe ein recht hoher Speisedruck aufbauen. Ein Beispiel hierfür ist die aus der US Patentschrift 4,642,040 bekannte Lösung. Bei dieser Lösung kann die Extruderschnecke an eine externe Welle angeschlossen sein, die mit einem variablen Getriebe in Verbindung steht. Über ein spezielles Getriebe lässt sich eine Zahnradpumpe antreiben, wobei bei dieser Lösung ein schräger Kanal auslassseitig des Extruders vorgesehen ist, der die Zahnradpumpe speisen soll. Diese in der dortigen Fig. 6 dargestellten Lösung ist recht aufwendig; der Kanal zwischen Extruderschnecke und Zahnradpumpe bedarf gegenenfalls einer zusätzlichen Beheizung.

Bei einer anderen Ausführungsform dieser aus der genannten Druckschrift bekannten Lösung ist die Zahnradpumpe über eine spezielle Wellenanordnung angetrieben, wobei der Antrieb von dem Antriebsmotor für die Extruderschnecke abgezweigt ist. Hier ist eine mehrfache Umlenkung über Tochtergetriebe und zusätzlich der Einsatz eines variablen Getriebes erforderlich, wobei die Patentschrift bereits impliziert, dass die dortige Ausgestaltung mit verschiedenen und vor allem langen externen Wellen nachteilig ist.

Es sind verschiedene Versuche bekannt geworden, diese Lösung zu verbessern. Beispielsweise ist eine weitere Kombination aus einem Extruder und einer Zahnradpumpe aus der EP-A1-508 285 bekannt geworden. Diese Konstruktion richtet ihr besonderes Augenmerk auf die Ausgestaltung der Zahnradpumpe und sieht einen separaten Antrieb für diese vor. Nachteilig dabei ist, dass die beiden Antriebe in besonderer Weise miteinander synchronisiert werden müssen, um die erwünschten Druckverhältnisse zu erzielen.

Die US Patentschrift 4,289,409 offenbart auch eine Extruder-/Zahnradpumpen-kombination.

Ferner ist in der DE-A1 100 49 730 eine Kombination eines Extruders mit einer Zahnradpumpe vorgeschlagen worden, bei der die Zahnradpumpe direkt an die Extruderschnecke angeflanscht ist. Diese Lösung vermeidet lange Strömungswege, ist kompakt und insofern störunanfällig. Es wäre jedoch wünschenswert, eine bessere Abdichtung im Hochdruckbereich, also ausgangseitig der Zahnradpumpe zu erhalten, wobei diese Lösung zusätzlich den gravierenden Nachteil aufweist, dass die Drehzahl der Zahnradpumpe an die Drehzahl der Extruderschnecke gekoppelt ist. Für unterschiedliche Kautschuk- und Thermoplastmischungen sind jedoch unterschiedliche Relativdrehzahlen erforderlich, so dass diese Lösung lediglich für eine oder hiermit gleichartige Kautschuk- oder Thermoplastmischung in Betracht kommt.

Daher liegt der Erfindung die Aufgabe zugrunde, eine Kombination aus einem Extruder und einer Zahnradpumpe gemäß dem Oberbegriff von Anspruch 1 zu schaffen, die die Nachteile langer Fliesswege vermeidet, wobei dennoch eine Regelung des Betriebspunktes möglich sein soll, ohne dass eine Mehrzahl von Antrieben erforderlich wäre.

Diese Aufgabe wird erfindungsgemäß durch Anspruch 1 gelöst. Vorteilhafte Weiterbildungen ergeben sich aus den Unteransprüchen.

Extruder weisen häufig eine beträchtliche Länge auf, gerade wenn sie zu Mischzwecken eingesetzt werden und hierzu beispielsweise Transferbereiche aufweisen. Eine hierfür bestimmte Extruderschnecke ist dann nicht mehr frei tragend, sondern läuft im Extrudergehäuse. Um den Wirkungsgrad der Durchmischung zu verbessern, ist es günstig, einen relativ großen Durchmesser für die Extruderschnecke an ihrem Außenumfang zu wählen. Hiermit einher geht eine Vergrößerung des Durchmessers des Extruderschneckenkerns. Um die Schleifwirkung im Schneckengehäuse geringzuhalten, sind hohle Extruderschnecken günstig.

Derartige Extruderschnecken haben den Vorteil eines vergleichsweise geringen Gewichts und einer guten Steifigkeit, so dass der Verschleiss zwischen Extruderschnecken und Extrudergehäuse geringer ist.

Eine insofern günstig ausgebildete Extruderschnecke lässt sich erfindungsgemäß in sehr vorteilhafte Weise einsetzen:

Die als Hohlwelle ausgebildete Extruderschnecke wird für die Aufnahme einer Antriebswelle für die Zahnradpumpe verwendet. Mit dieser überraschend einfachen Maßnahme lassen sich eine Vielzahl von Vorteilen erzielen.

Zunächst ist eine separate Abdichtung der Hohlwelle an ihrem Ende entbehrlich. Über die Zahnradpumpe kann die Extruderschnecke endseitig gelagert werden, so dass der Verschleiß durch Reibung zwischen Schneckengehäuse uns Extruderschnecke ausgesprochen gering ist.

Durch die Realisierung einer Hohlwelle ist die Neigung zur Durchbiegung auch bei recht langen Extrudern stark verringert. Erfindungsgemäß ist es besonders günstig, dass die Zahnradpumpe trotz Integration in der Extruderschnecke regelbar ist, wobei es besonders günstig ist, dass durch die automatische Mitnahme des Planetenradträgers mit der Extruderschnecke lediglich die Relativdrehzahl und damit die relative Förderrate einstellbar ist. Damit wird automatisch beim Herunterfahren des Extruders und damit des Hauptantriebs auch die Planeten-Zahnradpumpe heruntergeregelt, so dass die Regelung vereinfacht ist.

Hierzu ist es besonders günstig, wenn ein Vorschalt-Planetengetriebe zwischen der Zahnradpumpen-Antriebswälle und einer Zwischenwelle vorgesehen ist, dessen Hohlrad innen von der Extruderschnecke gebildet ist. So lassen sich auch unterschiedliche Compounds und Thermoplastmischungen optimal fördern, ohne dass eine Materialschädigung zu befürchten wäre.

Erfindungsgemäß besonders günstig ist es weiterhin, dass trotz der Verwendung eines innenliegenden Getriebes für die Bereitstellung der Einstellbarkeit der Relativdrehzahl mit lediglich eine einzige Abdichtung erforderlich ist, um das Getriebe vor den Elastomermassen zu schützen. Diese liegt zudem eingangsseitig der Zahnradpumpe, also noch nicht im Hochdruckbereich, so dass sie weniger beansprucht wird als eine Abdichtung im Hochdruckbereich. Praktisch liegt sie zudem im Bereich der Saugseite der Planeten-Zahnradpumpe, was die Belastung der Dichtung weiter reduziert.

Durch die Bereitstellung von Einlass- und Austassöffnungen benachbart dem Außenumfang der Planeten-Zahnradpumpe läßt sich eine günstige Förderrate bei gleichzeitig nicht übermäßig hoher Scherbeanspruchung des Materials erzielen, und das aus der Zahnradpumpe austretende Material lässt sich über einen Ausgangskonus strömungsgünstig ableiten.

Weitere Vorteile, Einzelheiten und Merkmale ergeben sich aus der nachfolgenden Beschreibung eines Ausführungsbeispiels der Erfindung anhand der Zeichnung.

Es zeigen:
Fig. 1 einen Teil einer erfindungsgemäßen Extruder/Zahnradpumpen-Kombination in einer Ausführungsform; und
Fig. 2 einen Schnitt durch den Zahnradpumpenteil der Ausführungsform gemäß Fig. 1.

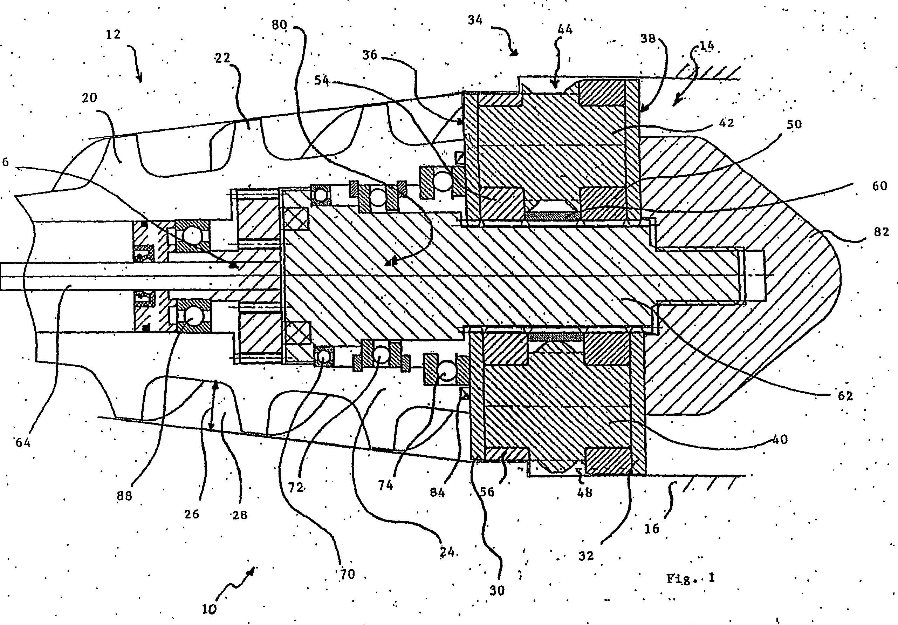

Die in Fig. 1 dargestellte Extruder/Zahnradpumpen-Kombination 10 weist einen Extruder 12 und eine Planeten-Zahnradpümpe 14 auf. Der Extruder 12 und die Zahnradpumpe 14 sind in einem gemeinsamen Gehäuse 16 untergebracht. Der Extruder weist eine hohle Extruderschnecke 20 auf, die in an sich bekannter Weise mit einer Extruderwendel 22 versehen ist, die sich auf einem Schneckenkern 24 erstreckt.

Zur Planeten-Zahnradpumpe 14 hin ist der Schneckenkern 24 aufgeweitet. Die Tiefe 26 der Schneckennuten 28 ist im Wesentlichen gleichbleibend, so dass die Extruderwendel 22 an ihrem Außenumfang entsprechend ebenfalls konisch verläuft. Einen entsprechenden Innenkonus weist dort das Gehäuse 16 auf, in dem die Extruderschnecke 20 in an sich bekannter Weise im Wesentlichen spielfrei geführt ist.

An die Extruderschnecke 20 schließt sich ausgangsseitig die Zahnradpumpe 14 an. Die Zahnradpumpe 14 weist eine erste Plänetenradträgerscheibe 54, 56 und eine zweite Planetenradträgerscheibe 50 auf, die gemeinsam den Planetenradträger 34 bilden. Die erste Planetenradträgerscheibe 54, 56 weist eine Mehrzahl von Einlassausnehmungen auf, von denen eine Einlassausnehmung 36 in Fig. 1 von der Anordnung her dargestellt ist. Entsprechend weist die zweite Planetenradträgerscheibe 50 eine Mehrzahl von Auslassausnehmungen auf, von denen eine Auslassausnehmung 38 in Fig. 1 von der Anordnung her dargestellt ist.

Die erste Planetenradträgerscheibe, deren äußere Bereiche mit dem Bezugszeichen 56 und deren innere Bereiche mit dem Bezugszeichen 54 bezeichnet sind, ist von einer Abdeckwand 30 abgedeckt. Die Abdeckwand 30 dichtet die Stirnseite der Planetenräder 40, 42 ab, die die erste Planetenradträgerscheibe 54, 56 durchtreten und in ihr gelagert sind. Ferner ist eine zweite Abdeckwand 32 vorgesehen, die die hintere, die zweite Planetenradträgerscheibe 50 auslassseitig abdeckt. In den Abdeckwänden 30 und 32 sind je Ausnehmungen vorgesehen, die den Einlassausnehmungen 36 und den Auslassausnehmungen 38entsprechen.

Die Einlassausnehmungen sind in der Draufsicht auf die erste Abdeckwand 30 aus Richtung der Extruderschnecke gesehen zwischen zwei benachbarten Planetenrädern vorgesehen, wobei in Fig. 1 die Planetenräder 40 und 42 dargestellt sind.

Die Planetenräder sind gleichmäßig und insofern kreisförmig verteilt. Zwischen ihnen erstrecken sich Schrägwände, die aus Fig. 1 nicht ersichtlich sind. Die Materialförderung erfolgt in einer Weise, wie sie in der DE-OS 100 49 730 beschrieben ist.

Die Planetenräder weisen eine Schrägverzahnung 44 auf. In Fig. 1 ist die Schrägverzahnung für das Planetenrad 40 anders dargestellt als die Schrägverzahnung 44 für das Planetenrad 42. Dies ergibt sich aus dem unterschiedlichen Drehwinkel in der Darstellung, der die betreffenden Zähne einerseits seitlich und andererseits mittig schneidet.

Die Schrägverzahnungen sind so gehalten, dass sie mit einem gehäusefesten Hohlrad 48 kämmen, das dementsprechend auch eine Schrägverzahnung aufweist.

Durch die erfindungsgemäße Lösung lässt sich ein ausgesprochen großer Teil der Querschnittsfläche der Zahnradpumpe mit den Planetenräder ausfüllen, so dass die erfindungsgemäße Zahnradpumpe besonders druckstabil arbeitet.

Seitlich der Schrägverzahnung 44 erstrecken sich je die Planetenradträgerscheiben 50, 54 und 56 in der aus Fig. 1 ersichtlichen Weise, wobei die Planetenradträgerscheiben mit einer Innenverzahnung ausgestattet sind.

Die erste Planetenradträgerscheibe weist bei 56 einen Außendurchmesser auf, der etwas geringer als der Außendurchmesser der Planetenradträgerscheibe 50 ist und dem Außendurchmesser der Extruderschnecke an ihrem zahnradpumpenseitigen Ende entspricht

Der Antrieb der erfindungsgemäßen Planeten-Zahnradpumpe erfolgt über einen Antrieb des Planetenradträgers 34. Die Abdeckwände 30 und 32 sind ebenfalls mit einer Innenverzahnung versehen. Sowohl diese Innenverzahnungen als auch die Innenverzahnungen der Planetenradträgerscheiben 50, 54 und 56 sowie die Innenverzahnung eines dazwischen angeordneten Trennkörpers 60 sind formschlüssig angetrieben auf einer Außenverzahnung einer Zwischenwelle 62 aufgesteckt, die erfindungsgemäß mit einer Zahnradpumpenwelle 64 drehfest verbunden ist, wie es nachstehend erläutert ist.

Die Zwischenwelle 62 ist in der Extruderschnecke 20 über ein Radialkugellager 70 abgestützt. Über zwei Axialkugellager 72 und 74 erfolgt zusätzlich eine Abstützung je an Schultern in einer entsprechenden Aufweitung 80 der hohlen Extruderschnecke 20 an ihrem zahnradpumpenseitigen Ende. Ein Ausgangskonus 82 ist endseitig auf die Zwischenwelle 62 aufgeschraubt und stützt sich gegen die Abdeckwand 32 ab. Ein Dichtring 84 ist an der Stirnseite der Extruderschnecke 20 eingelassen und dichtet in radialer Richtung gegen das Eindringen von Material in den Bereich der Zwischenwelle 62 gegen die Abdeckwand 30 ab.

Die Zwischenwelle 62 bildet zugleich einen Planetenträger für ein Planetengetriebe 86, dessen Sonnenrad mit der Zahnradpumpenwelle 64 in Verbindung steht. Das Hohlrad des Planetengetriebe 86 ist als Innenverzahnung der Aufweitung 80 der Extruderschnecke 20 ausgebildet. Es versteht sich, dass in an sich bekannter Weise durch die Wahl des Durchmessers der Planetenräder und des Sonnenrads des Planetengetriebes 86 das Untersetzungsverhältnis einstellbar ist.

Die Zahnradpumpenwelle 64 ist über ein weiteres Radialkugellager 88 in der hohlen Extruderschnecke 20 abgestützt.

Durch diese Anordnung lässt sich die Zahnradpumpe 14 durch die hohle Extruderschnecke 20 antreiben. Auch wenn die Relativgeschwindigkeit zwischen Zahnradpumpenwelle 64 und Extruderschnecke 20 null ist, wird die Zahnradpumpe 14 mit ihrem Planetenradträger 34 angetrieben. Durch Voreilung oder Nacheilung des Antriebs der Zahnradpumpenwelle 64 gegenüber der Extruderschnecke 20 lässt sich die relative Drehzahl der Zahnradpumpe 14 zur Extruderschnecke 20 einstellen und in weiten Bereichen an die Erfordernisse, also das zu fördernde Material, anpassen.

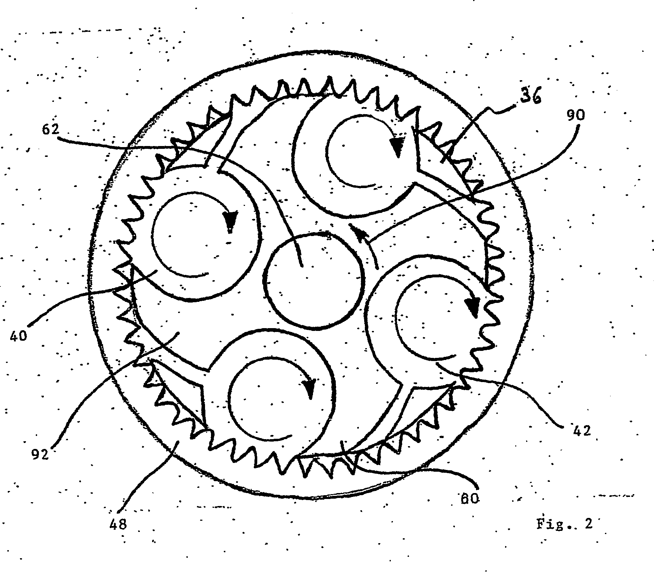

In Fig. 2 ist die Zahnradpumpe im Schnitt dargestellt. Die Form des Trennkörpers 60 ist gut ersichtlich, wobei die hier dargestellte Lösung für vier Planetenräder bestimmt ist. Die Planetenräder 40 und 42 rollen auf dem Hohlrad 48 ab, wenn sie geführt durch den planetenradträger 34 gedreht werden. Die Drehrichtung des Planetenradträgers 34 entspricht der Drehrichtung des Trennkörpers 60, die beide durch entsprechende Verzahnung mit der Zwischenwelle 62 verbunden sind. Dies ist durch den Pfeil 90 dargestellt, In an sich bekannter Weise drehen sich die Planetenräder in umgekehrter Richtung. Der Trennkörper 60 weist an seinem Außenumfang, an dem er die Schrägwände 92 bildet, eine tangentiale Erstreckung auf, die sich über etwa das eineinhalbfache der Zahnbreite des Hohlrads 48 erstreckt. Hierdurch lässt sich ein Überströmen außen an dem Trennkörper 60 sicher verhindern.

Der Betrieb der erfindungsgemäßen Extruder/Zahnradpumpen-Kombination 10 erfolgt so, dass zunächst das Drehzahlverhältnis zwischen Zahnradpumpenwelle 64 und Extruderschnecke 20 vorgewählt wird. Über ein entsprechend änderbares, stufenloses Getriebe lässt sich dieses Verhältnis einstellen, ohne dass zwei Antriebe erforderlich wären. Die Einstellung erfolgt materialabhängig. Bereits beim Anlaufen läuft die Extruderschnecke und die Zahnradpumpe im gewünschten Drehzahlverhältnis los. Der Extruder 12 baut einen Eingangsdruck an der Einlassöffnung 36 auf. Durch den Antrieb der Zahnradpumpe 14 über die Zwischenwelle 62 wird durch Bewegung der Schrägwände Material zu den Auslassöffnungen 38 gefördert.

Das Material tritt zwischen den Planetenrädern, die miteinander nicht im Gewindeeingriff sind, an deren äußeren Bereichen, aber in gleicher Weise aber auch an deren inneren Bereichen hindurch, wobei es durch die erfindungsgemäße Ausgestaltung praktisch vollständig vermieden wird, dass ein Rückstrom entsteht.

Ausgangsseitig der erfindungsgemäßen Kombination steht das geförderte Material mit einem hohen Förderdruck an, wobei es sich versteht, dass der Auslassbereich in beliebiger geeigneter Weise ausgebildet sein kann.

## Patentansprüche

1. Extruder-/Zahnradpumpen-Kombination, mit einer Extruderschnecke (20) und einer an diese angeschlossenen Zahnradpumpe (14),
**dadurch gekennzeichnet, dass** die Extruderschnecke (20) in axialer Richtung hohl ausgestaltet ist und dass in der hohlen Extruderschnecke (20) eine Zahnradpumpenwelle (64) gelagert ist, über die die Relativgeschwindigkeit von Extruderschnecke (20) und Zahnradpumpe (14) einstellbar ist

2. Extruder-/Zahnradpumpen-Kombination nach Anspruch 1, **dadurch gekennzeichnet, dass** die Zahnradpumpe (14) als Planetenradpumpe ausgebildet ist.

3. Extruder-/Zahnradpumpen-Kombination nach Anspruch 1 oder 2, **dadurch gekennzeichnet, dass** die Welle eine Zahnradpumpenwelle (64) ist, die mit dem Planetenradträger (50, 54, 56) drehfest verbunden ist.

4. Extruder-/Zahnradpumpen-Kombination nach einem der vorhergehenden Ansprüche, **dadurch gekennzeichnet, dass** eine in der Extruderschnecke (20) laufende Zahnradpumpenwelle (64) mit der Zahnradpumpe (14) in Getriebeverbindung steht, wobei insbesondere die Extruderschnecke (20) das Hohlrad eines Planetengetriebes (86) bildet oder aufweist.

5. Extruder-/Zahnradpumpen-Kombination nach einem der vorhergehenden Ansprüche, **dadurch gekennzeichnet, dass** der Durchmesser des Kerns (24) der Extruderschnecke (20) sich zur Zahnradpumpe (14) hin vergrößert und die Extruderschnecke zu der Zahnradpumpe (14) hin aufgeweitet ist.

6. Extruder-/Zahnradpumpen-Kombination nach einem der vorhergehenden Ansprüche, **dadurch gekennzeichnet, dass** eine Innen-Aufweitung (80) der Extruderschnecke (20) ein Getriebe (86) zwischen der Zahnradpumpenwelle (64) und der Zahnradpumpe (14) aufnimmt.

7. Extruder-/Zahnradpumpen-Kombination nach einem der vorhergehenden Ansprüche, **dadurch gekennzeichnet, dass** der Planetenradträger (34) der Zahnradpumpe (14) eine erste Planetenradträgerscheibe (56, 54) und eine zweite Planetenradträgerscheibe (50) aufweist, zwischen denen sich die Planetenräder (40, 42) erstrecken und in denen sie gelagert sind, wobei die erste Planetenradträgerscheibe (56, 54) Einlassausnehmungen (36) und die zweite Planetenradträgerscheibe (50) Auslassausnehmungen (38) aufweist.

8. Extruder-/Zahnradpumpen-Kombination nach Anspruch 7, **dadurch gekennzeichnet, dass** die erste Planetenradträgerscheibe (56, 54) von einer ersten Abdeckwand (30) abgedeckt ist, die sich zum Extruder hin erstreckt und mit der Planetenradträgerscheibe mitläuft und den Einlassausnehmungen (36) entsprechende Ausnehmungen aufweist, und dass eine zweite Abdeckwand (32) vorgesehen ist, die die zweite Planetenradträgerscheibe (50) abdeckt und mit ihr mitläuft sowie den Auslassausnehmungen (38) entsprechende Ausnehmungen aufweist.

9. Extruder-/Zahnradpumpen-Kombination nach Anspruch 7 oder 8, **dadurch gekennzeichnet, dass** sich zwischen der ersten Planetenradträgerscheibe (54) und der zweiten Planetenradträgerscheibe (50) des Planetenradträgers (34) Schrägwände (92) erstrecken, deren Ausrichtung zur Wendelrichtung der Extruderschnecke (20) entgegengesetzt ist.

10. Extruder-/Zahnradpumpen-Kombination nach einem vorhergehenden Ansprüche, **dadurch gekennzeichnet, dass** die Zahnradpumpe (14) eine Schrägverzahnung (44) aufweist.

11. Extruder-/Zahnradpumpen-Kombination nach Anspruch 9 und 10, **dadurch gekennzeichnet, dass** der Schrägstellungswinkel der Schrägwände (92) und der Schrägverzahnung (44) im Wesentlichen gleich ist und insbesondere zwischen 5° und 25° beträgt.

12. Extruder-/Zahnradpumpen-Kombination nach einem der Ansprüche 2 bis 11, **dadurch gekennzeichnet, dass** der Planetenradträger (34) der Zahnradpumpe (14) drehfest mit einer Zwischenwelle (62) verbunden ist die in Getriebeverbindung mit der Zahnradpumpenwelle (64) steht.

13. Extruder-/Zahnradpumpen-Kombination nach einem der Ansprüche 2 bis 12, **dadurch gekennzeichnet dass** der Kerndurchmesser der Extruderschnecke (14) im Wesentlichen dem Durchmesser des durch die Bewegung der Achsen der Planetenräder (40, 42) aufgespannten Achsenkreises entspricht oder etwas größer als dieser ist, bezogen auf das zahnradpumpenseitige Ende der Extruderschnecke (20).

14. Extruder-/Zahnradpumpen-Kombination nach Anspruch 7 und gff. einem der Ansprüche 2 bis 13, **dadurch gekennzeichnet, dass** die Einlassausnehmungen (36) und die Auslassausnehmungen (38) in der ersten Planetenradträgerscheibe (54, 56) und der zweiten Planetenradträgerscheibe (50) der Zahnradpumpe (14) sich im radial äußeren Drittel, insbesondere im radial äußeren Viertel der Scheiben erstrecken und insbesondere der Extruderkerndurchmesser bündig mit dem radial inneren Ende der Ausnehmungen (36, 38) ist.

15. Extruder-/Zahnradpumpen-Kombination nach einem der Ansprüche 2 bis 14, **dadurch gekennzeichnet, dass** das Zahnradpumpengehäuse (16) im Bereich der Verzahnung der Planetenräder (40,42) als Hohlrad (46) ausgebildet ist.

16. Extruder-/Zahnradpumpen-Kombination nach einem der Ansprüche 2 bis 15, **dadurch gekennzeichnet, dass** sich ein Trennkörper (60) zwischen den Planetenräder erstreckt, der die Zwischenwelle (62) umgibt und drehfest mit ihr verbunden ist und der insbesondere die Schrägwände (92) bildet.

## Claims

1. An extruder/gear pump assembly, comprising an extruder screw (20) and a gear pump (14) connected thereto, **characterised in that** the extruder screw (20) is configured as hollow in the axial direction and that a gear pump shaft (64) is mounted in the hollow extruder screw (20), by which means the relative speed of extruder screw (20) and gear pump (14) can be adjusted.

2. The extruder/gear pump assembly according to claim 1, **characterised in that** the gear pump (14) is configured as a planetary gear pump.

3. The extruder/gear pump assembly according to claim 1 or 2, **characterised in that** the shaft is a gear pump shaft (64) which is connected to the planet carrier (50, 54, 56) in a rotationally fixed manner.

4. The extruder/gear pump assembly according to any one of the preceding claims, **characterised in that** a gear pump shaft (64) running in the extruder screw (20) is in geared communication with the gear pump (14), wherein in particular the extruder screw (20) forms or comprises the hollow wheel of a planetary gear (86).

5. The extruder/gear pump assembly according to any one of the preceding claims, **characterised in that** the diameter of the core (24) of the extruder screw (20) becomes larger towards the gear pump (14) and the extruder screw is expanded towards the gear pump (14).

6. The extruder/gear pump assembly according to any one of the preceding claims, **characterised in that** an inner expansion (80) of the extruder screw (20) receives a gear (86) between the gear pump shaft (64) and the gear pump (14).

7. The extruder/gear pump assembly according to any one of the preceding claims, **characterised in that** the planet carrier (34) of the gear pump (14) comprises a first planet carrier disk (56, 54) and a second planet carrier disk (50), between which the planetary wheels (40, 42) extend and in which they are mounted, wherein the first planet carrier disk (56, 54) has inlet recesses (36) and the second planet carrier disk (50) has outlet recesses (38).

8. The extruder/gear pump assembly according to claim 7, **characterised in that** the first planet carrier disk (56, 54) is covered by a first covering wall (30) which extends towards the extruder and revolves with the planet carrier disk and has recesses corresponding to said inlet recesses (36) and that a second covering wall (32) is provided which covers the second planet carrier disk (50) and revolves with said disk and has recesses corresponding to said outlet recesses (38).

9. The extruder/gear pump assembly according to claim 7 or 8, **characterised in that** sloping walls (92) extend between the first planet carrier disk (54) and the second planet carrier disk (50) of the planet carrier (34), the alignment of said walls being opposite to the helix direction of the extruder screw (20).

10. The extruder/gear pump assembly according to any one of the preceding claims, **characterised in that** the gear pump (14) has an oblique toothed structure (44).

11. The extruder/gear pump assembly according to claim 9 and 10, **characterised in that** the angle of inclination of the sloping walls (92) and the sloping toothed structure (44) is substantially the same and in particular is between 5° and 25°.

12. The extruder/gear pump assembly according to any one of claims 2 to 11, **characterised in that** the planet carrier (34) of the gear pump (14) is connected in a rotationally fixed manner to an intermediate shaft (62) which is in geared communication with the gear pump shaft (64).

13. The extruder/gear pump assembly according to any one of the claims 2 to 12, **characterised in that** the core diameter of the extruder screw (14) substantially corresponds to the diameter of the axial circle spanned by the movement of the axes of the planetary wheels (40, 42) or is somewhat larger than this, relative to the end of the extruder screw (20) on the gear pump side.

14. The extruder/gear pump assembly according to claim 7 and optionally one of claims 2 to 13, **characterised in that** the inlet recesses (36) and the outlet recesses (38) in the first planet carrier disk (54, 56) and the second planet carrier disk (50) of the gear pump (14) extend in the radially outer third, in particular in the radially outer quarter of the disks and in particular the extruder core diameter is flush with the radially inner end of the recesses (36, 38).

15. The extruder/gear pump assembly according to any one of claims 2 to 14, **characterised in that** the gear pump housing (16) is formed as a hollow wheel (46) in the area of the toothed structure of the planetary wheels (40, 42).

16. The extruder/gear pump assembly according to any one of claims 2 to 15, **characterised in that** a separating member (60) extends between the planetary wheels, which surrounds the intermediate shaft (62) and is connected in a rotationally fixed manner thereto and which in particular forms the sloping walls (92).

## Revendications

1. Combinaison extrudeuse/pompe à engrenages, comportant une vis d'extrudeuse (20) et une pompe à engrenages raccordée à celle-ci (14), **caractérisée en ce que** la vis d'extrudeuse (20) a une conformation creuse dans le sens axial et que, dans la vis d'extrudeuse creuse (20), s'appuie un arbre de pompe à engrenages (64) permettant de régler la vitesse relative de la vis d'extrudeuse (20) et de la pompe à engrenages (14).

2. Combinaison extrudeuse/pompe à engrenages selon la revendication 1, **caractérisée en ce que** la pompe à engrenages (14) est réalisée sous forme d'une pompe à roues planétaires.

3. Combinaison extrudeuse/pompe à engrenages selon la revendication 1 ou 2, **caractérisée en ce que** l'arbre est un arbre de pompe à engrenages (64) qui est relié de manière fixe en rotation au support de roues planétaires (50, 54, 56).

4. Combinaison extrudeuse/pompe à engrenages selon une des revendications précédentes, **caractérisée en ce qu'**un arbre de pompe à engrenages (64) circulant dans la vis d'extrudeuse (20) est en liaison de transmission avec la pompe à engrenages (14), tandis que notamment la vis d'extrudeuse (20) constitue ou englobe la roue creuse d'un engrenage planétaire (86).

5. Combinaison extrudeuse/pompe à engrenages selon une des revendications précédentes, **caractérisée en ce que** le diamètre du noyau (24) de la vis d'extrudeuse (20) augmente en direction de la pompe à engrenages (14) et que la vis d'extrudeuse s'élargit en direction de la pompe à engrenages (14).

6. Combinaison extrudeuse/pompe à engrenages selon une des revendications précédentes, **caractérisée en ce qu'**un élargissement intérieur (80) de la vis d'extrudeuse (20) reçoit un engrenage (86) entre l'arbre de pompe à engrenages (64) et la pompe à engrenages (14).

7. Combinaison extrudeuse/pompe à engrenages selon une des revendications précédentes, **caractérisée en ce que** le support de roues planétaires (34) de la pompe à engrenages (14) comporte un premier disque support de roues planétaires (56, 54) et un deuxième disque support de roues planétaires (50) entre lesquels s'étendent les roues planétaires (40, 42) et dans lesquelles elles s'appuient, le premier disque support de roues planétaires (56, 54) comprenant des évidements d'admission (36) et le deuxième disque support de roues planétaires (50) comprenant des évidements de sortie (38).

8. Combinaison extrudeuse/pompe à engrenages selon la revendication 7, **caractérisée en ce que** le premier disque support de roues planétaires (56, 54) est recouvert par une première paroi de recouvrement (30) qui s'étend jusqu'à l'extrudeuse et tourne avec le disque support de roues planétaires et comporte des évidements correspondant aux évidements d'admission (36) et qu'il est prévu une deuxième paroi de recouvrement (32) qui recouvre le deuxième disque support de roues planétaires (50) et tourne avec lui et comporte des évidements correspondant aux évidements de sortie (38).

9. Combinaison extrudeuse/pompe à engrenages selon la revendication 7 ou 8, **caractérisée en ce qu'**entre le premier disque support de roues planétaires (54) et le deuxième disque support de roues planétaires (50) du support de roues planétaires (34), s'étendent des parois obliques (92) dont l'orientation est opposée au sens d'hélice de la vis d'extrudeuse (20).

10. Combinaison extrudeuse/pompe à engrenages selon une des revendications précédentes, **caractérisée en ce que** la pompe à engrenages (14) comporte une denture oblique (44).

11. Combinaison extrudeuse/pompe à engrenages selon les revendications 9 et 10, **caractérisée en ce que** l'angle de position oblique des parois obliques (92) et de la denture oblique (44) est sensiblement égal et va notamment de 5° à 25°.

12. Combinaison extrudeuse/pompe à engrenages selon une des revendications 2 à 11, **caractérisée en ce que** le support de roues planétaires (34) de la pompe à engrenages (14) est relié de manière fixe en rotation à un arbre intermédiaire (62) qui est en liaison de transmission avec l'arbre de pompe à engrenages (64).

13. Combinaison extrudeuse/pompe à engrenages selon une des revendications 2 à 12, **caractérisée en ce que** le diamètre de noyau de la vis d'extrudeuse (14) équivaut sensiblement au diamètre du secteur d'axe circonscrit par le mouvement des axes des roues planétaires (40, 42) ou est un peu plus élevé que celui-ci par rapport à l'extrémité située côté pompe à engrenages de la vis d'extrudeuse (20).

14. Combinaison extrudeuse/pompe à engrenages selon la revendication 7 et éventuellement une des revendications 2 à 13, **caractérisée en ce que** les évidements d'admission (36) et les évidements de sortie (38) s'étendent dans le premier disque support de roues planétaires (54, 56) et le deuxième disque support de roues planétaires (50) de la pompe à engrenages (14) dans le tiers radialement extérieur, notamment dans le tiers radialement extérieur des disques et notamment que le diamètre du noyau d'extrudeuse affleure avec l'extrémité radialement intérieure des évidements (36, 38).

15. Combinaison extrudeuse/pompe à engrenages selon une des revendications 2 à 14, **caractérisée en ce que** le boîtier de pompe à engrenages (16) est réalisé sous forme de roue creuse (46) au niveau de la denture des roues planétaires (40, 42).

16. Combinaison extrudeuse/pompe à engrenages selon une des revendications 2 à 15, **caractérisée en ce qu'**entre les roues planétaires s'étend un corps de séparation (60) qui entoure l'arbre intermédiaire (62) et est relié à celui-ci de manière fixe en rotation et qui constitue notamment les parois obliques (92).
